# EUROPEAN PATENT APPLICATION

(11) **EP 3 282 564 A1**
(43) Date of publication of application: **14.02.2018**
(21) Application number: 17185471.4
(22) Date of filing: 09.08.2017
(51) Int. Cl.: H02K 7/02, H02K 1/27, H02K 7/14, H02K 1/28

(54) **BRUSHLESS TYPE MOTOR AND ROTOR FOR A MOTOR**

(30) Priority: 09.08.2016 BR 102016018348; 21.07.2017 BR 102017015688
(71) Applicant: Huangshi Dongbei Electrical Appliance Co., Ltd., Huangshi, Hubei 435006 (CN)
(72) Inventor: SCHWARZ, Marcos Guilherme, 89221-103 Joinville, Santa Catarina (BR); KALLUF, Flavio Jorge Haddad, 89203-074 Joinville, Santa Catarina (BR)
(74) Representative: Maiwald Patentanwalts GmbH

(57) **Abstract**

The present invention relates to a brushless type motor and to rotor (2) for brushless type motor with surface magnets (3). The rotor having an axial extension (8) in which is inserted the shaft having the axial extension (8) a height greater than that of the stator (1) package, and the axial extension (8) also characterized by having a radial extension (9) into the lower base of the magnets (3), the radial extension (9) having an external radius greater than or equal to the radius of the axial extension (8), but less than or equal to the external radius of the magnets (3). The axial (8) and radial (9) extensions being used for fixing the shaft, increasing the moment of inertia, increasing the magnetic flux generated by the magnets (3) and also serving as a base for the assembly of the magnets.

## Description

### TECHNICAL FIELD

The present invention relates to a motor with a rotor designed for brushless type motors, used in variable-capacity hermetic compressors, for refrigeration. Other types of motors, such as for example, reluctance motors, or any other that does not require a rotor cage can benefit from the present invention.

### DESCRIPTION OF THE STATE OF THE ART

Variable-capacity hermetic compressors normally use a mechanical connecting rod-and-piston type system, connected to the shaft by an eccentric pin. To move such mechanism, it is normally used brushless type motors, which are usually composed of a stator and a rotor, the latter being composed of a laminated electric steel core and surface magnets (although it is also possible to find rotor versions with magnets inserted internally). The stator is usually fixed to the crankcase by screws, and also fixed to the suspension springs. On the other hand, the rotor is secured to the eccentric shaft by means of mechanical interference during the assembly process.

The brushless motor, unlike the brushed motors, has permanent magnets fixed to the rotor. It usually has 4 magnets around the perimeter and the motor stator is composed of coils, usually 6 of them, forming an angle of 60° between them. It is believed that the major advantage of brushless motors is that, due to the fact that the rotor contains permanent magnets, it does not require power and, therefore, no rotor connection is required. Such a feature provides advantages over brushed motors, among which stand out higher reliability, reduced noise, longer service life, due to the absence of brush wear, and elimination of the switch ionization. In addition, the brushless motors are more efficient in terms of energy consumption.

Hermetic compressors for refrigeration are used in freezers, refrigerators, drinking fountains, air-conditioner and other applications. An important feature of the compressors is their size, since there is a limited space within the system wherein it will be applied and, therefore, the smaller the compressor, the greater the range of refrigeration systems in which it can be applied.

In this way, it is desirable that the size of the compressor, and especially its height, be the smallest possible, in order to maximize the use of the product in refrigeration systems.

The height of the compressor is mainly dictated by the distance between the top of the crankcase and the lower part of the suspension springs. Therefore, it would be interesting if such distance were reduced in order to also reduce the overall height of the compressor.

To reduce the distance between the crankcase and the bottom of the suspension springs, however, it is also necessary that the total height of the radial bearing (bearing between the shaft and the crankcase) be reduced. The reduction of such height, however, also reduces the total bearing surface and potentiate shaft wear problems.

Another problem related to such type of motor is the reduced moment of inertia of the rotor and shaft assembly. As the magnet density is significantly lower than the electric steel density, the rotor of brushless type motors can present problems regarding its operation with high load and/ or with low rotation. That is, any peak of load could cause a very large drop in speed, causing the compressor to stop working.

Yet, another problem related to this type of motor is the axial positioning of the magnets at the time of the rotor assembly. The correct axial positioning of the magnets is essential to avoid problems related to wear and noise during the operation of the compressor, since poor alignment of the magnets causes magnetic imbalance and generates high frequency axial forces, which causes undesired vibration.

A desirable feature for this type of motor is the maximization of the magnetic flux generated by the magnet, because the larger the flow generated, the lower the current required for torque generation, and greater will be the efficiency of the motor. Thus, a low magnetic reluctance path would be desirable in order to maximize the motor efficiency.

Prior art documents have already suggested methods for securing the rotor to the compressor shaft, such as for example in document US 9,188,370, wherein the rotor is secured by interference to a shaped steel structure. The structure of the cited patent is useful for motors in which the rotor does not need to be produced through a laminated package. Since in the case of high efficiency motors the use of laminated packages is mandatory, such method could not be used. Another problem related to such method is the insertion height, especially in cases wherein this height should be small. In this case, the total area for securing may not be sufficient to ensure rotor support, and may cause reliability problems for the compressor. Yet another disadvantage of such method is the reduced inertia of the assembly. As most of the shaped steel structure is close to the shaft, the inertia of the rotor is quite low and may cause undesired effects both at the start of the compressor, as well as in high load situations.

### GOALS OF THE INVENTION

It is a goal of the invention to solve the problem of a desirable reduction of the height of the compressor without the loss of height of the bearing.

It is another goal of the invention to increase the moment of inertia of the rotor and shaft assembly.

It is yet another goal of the invention to facilitate the correct positioning of the magnets during their assembly.

It is a goal of the invention to maximize the flux generated by the magnets.

The present invention aims to solve these and other drawbacks, as will be better described below.

### SUMMARY OF THE INVENTION

The present invention relates to a brushless type motor and to a rotor. Said motor comprising surface magnets, and the rotor comprising an axial extension that extends towards the end opposite to the coupling part of the shaft. The axial extension having a height greater than that of the limit of the stator, the axial extension further presenting a radial extension projecting adjacently to a lower base of the magnets, said radial extension having an external radius greater than the radius of the rotor surface adjacent to the internal surface of the magnets, but less than or equal to the radius of an external surface of the magnets. It is noted that the axial extension of the rotor extends beyond the lower bases of the magnets and the radial extension extends adjacently to the lower bases of the magnets, so as to create a reference base for axial alignment of the magnets, during the assembly.

The axial and the radial extension are composed of laminated electrical steel, but may also be a further solid (non-laminated) component, preferably composed of ferromagnetic material. That is, the axial extension and/ or radial extension may comprise a further detachable solid component.

Regarding the modalities, the following should be noticed:

The present invention, in a preferred embodiment, relates to a rotor and shaft assembly that are positioned adjacently and secured in a conventional manner (by glue or interference). Since the increase of the axial extension of the blade package (rotor core) is capable of decreasing the height of the crankcase and increasing the radius of the external surface of the rotor in its lower region, so as to overcome the internal surface of the magnets adjacently to the external surface of the rotor, thus, enabling an increase of inertia of the rotor shaft assembly. It is important to note that, in the preferred embodiment, defined in the claims, the outermost radius of the extension does not extend beyond the external radius of the magnets, however, this could happen as long as it does not impair the operation of the motor. That is, an adequate fixation of the stator would allow such an increase in radius, which would improve inertia without impairing the operation of the motor.

Such modifications, i.e., the axial and radial extensions, were able to allow the entire rotor and stator assembly to be moved so as to approach the crankcase.

In a second embodiment, it can be used an axial and radial extension, formed by an additional component made with any material having a sufficient rigidity for insertion of the shaft. Such component is secured in many ways (rivet, glue, screw and etc.) to the lower part of the rotor, so as to enable the rotor and shaft assembly to be displaced.

Therefore, with the extension of the rotor, it is possible to maintain the height of the bearings and, in this way, avoid possible shaft wear problems.

In this way, the problem concerning the moment of inertia is solved by the axial extension of the rotor and by the use of radial extensions in the lower part of the blade package.

The radial extension in the lower part of the blade package is also beneficial from the point of view of total magnetic flux generated by the magnets, as it reduces the total reluctance of the magnetic circuit.

The radial extension in the lower part of the blade package also solves the problem of axial positioning of the magnets during the assembly, as it provides a solid base as a reference for such assembly.

### BRIEF DESCRIPTION OF THE DRAWINGS

After the brief description, the invention will now be described in detail with the aid of examples presented in the form of Figures.
Figure 1 - A cross-sectional view of part of the mechanical assembly and electric motor, showing an example of the concept that nowadays is the most used for the application in hermetic compressors.
Figure 2 - A cross-sectional view of the same mechanical assembly and electric motor of Figure 1, but in this example with the reduced radial bearing.
Figure 3 - A cross-sectional view of part of the solution proposed in the present invention.
Figure 4 - A cross-sectional view illustrating an additional modification, consisting of using the radial extensions of the lower part of the rotor blade package.
Figure 5 - A cross-sectional view illustrating the dimensions of the compressor components.
Figure 6 - Example of a rotor with axial misalignment of one of the magnets.
Figure 7 - A view showing an alternative configuration for the rotor extension, the extended portion being composed of an additional component.

### DETAILED DESCRIPTION OF THE DRAWINGS

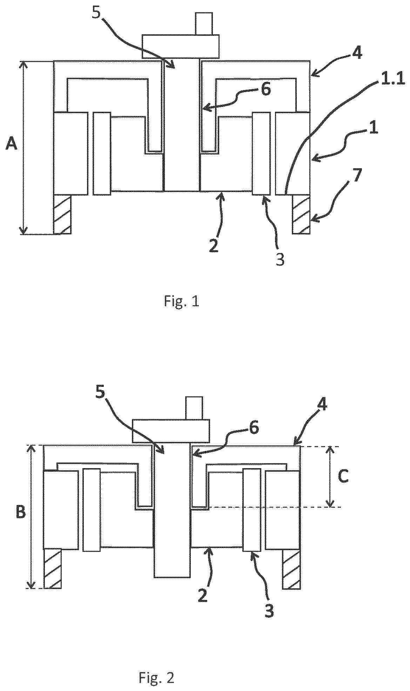

In figure 1 it is illustrated a cross-section of part of the mechanical assembly and the electric motor, showing an example of the concept that nowadays is the most used for the application in hermetic compressors. In such figure, the assembly is composed of a stator 1, which has a limit 1.1. The stator 1 is fixed at its upper part to the crankcase 4, and at its lower part by the suspension springs 7. The rotor is composed of a laminated electric steel core 2, and magnets 3, usually made of ferrite. The rotor core 2 is fixed to the shaft 5, making interface with crankcase 4 through the radial bearing 6. The conventional height of the assembly is illustrated therein with the letter A.

In figure 2, it is possible to see the same mechanical assembly and electric motor, but in this example the radial bearing 6 has been reduced, so that the rotor 2 and stator 1 could be moved upwards, in order to reduce the total height of the assembly which is now illustrated with the letter B. Although it actually reduces the height of the compressor, such method can have undesirable consequences, such as excessive wear on the shaft 5, increased compressor consumption and, in an extreme case, the complete locking of the mechanism. The bearing, now too short, can be seen and is illustrated by the letter C.

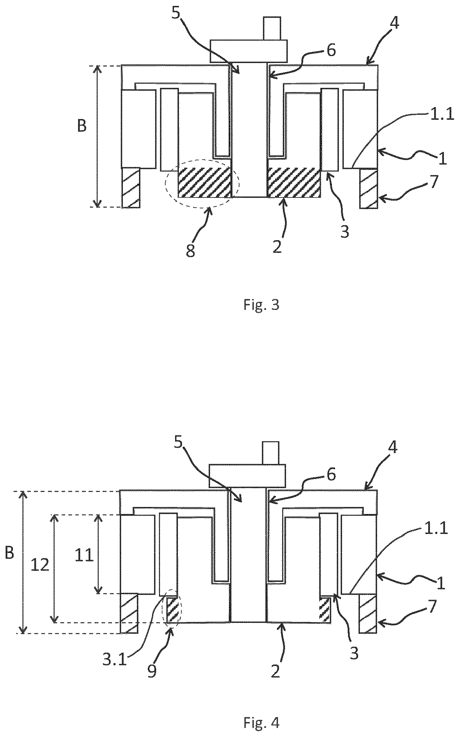

In figure 3, it is possible to see part of the proposed solution, which consists of using an axial extension 8 of the rotor 2, beyond the limit 1.1 of the stator 1, and further extending the height of the radial bearing 6 to reduce the frictional wear and maintain the height B of the assembly. In this way, the rotor 2 is now inserted in a position closer to the lower part of the shaft 5. This extension of the rotor 2 also brings an increase of the moment of inertia of the rotating assembly, which guarantees a more effective start and a more stable operation. The length of said axial extension is variable depending of the size of the shaft.

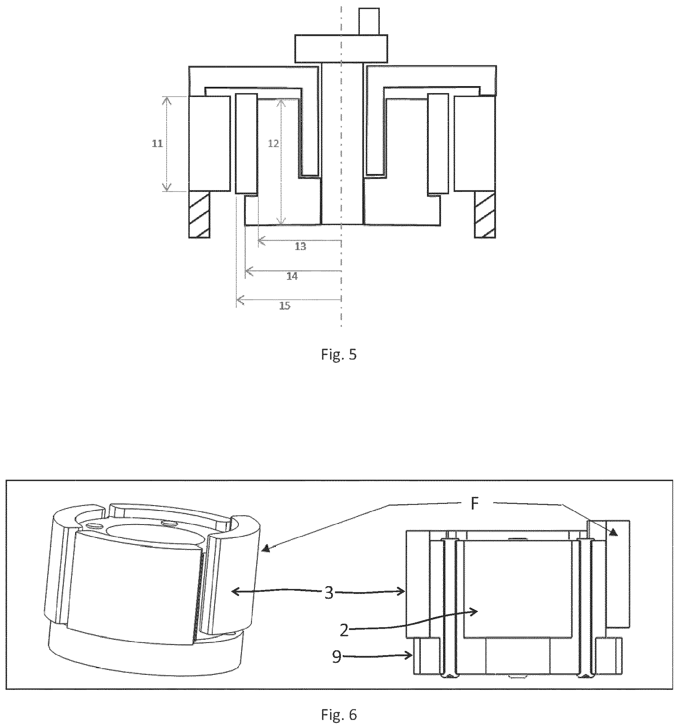

In figure 4, with the height B still held, it is possible to see an additional feature consisting of a radial elongation/ extension 9 of the lower part of the rotor blade package 2 (axial extension 8). These extensions extend beyond the height 11 of the stator 1 and contribute by further increasing the moment of inertia of the rotating assembly (rotor and shaft), in addition to providing an increase in the total magnetic flux generated by the magnets, increasing the efficiency of the motor. Thus, the axial extension 8 further has a radial extension 9 projecting adjacently to a lower base 3.1 of the magnets 3, said radial extension 9 having an external radius 14 (illustrated in Figure 5) greater than the conventional radius 13 of the rotor 2, however, preferably, less than or equal to the radius 15 of an external surface of the magnets 3, as illustrated in Figure 5.

In figure 5, it can be seen that, in the proposed solution, the height 12 of the extended rotor 2 is significantly greater than the height 11 of the stator 1. It can also be seen that the radius 14 of the lower part of the extended rotor is, preferably, intermediate to the radius 13 of the rotor package and to the external radius 15 of the magnets.

The value of the radius 14 and of the extension 9 are not fixed and change due to the desired reduction of total height of the assembly and, in addition, of the moment of inertia and magnetic flux to be increased, respectively.

In figure 6, the letter F illustrates an example of a rotor 2 with bad axial positioning of one of the magnets 3. This is one of the problems that can be avoided by using the radial extension 9 of the lower part of the rotor blade package, since such extension creates a reference base which enables a perfect axial alignment of the magnets 3 during the assembly.

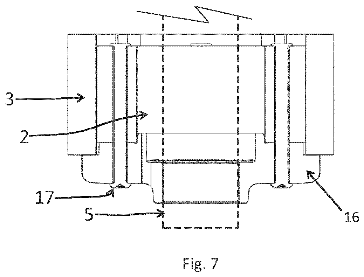

In figure 7, it is possible to see an alternative configuration for the extension of the rotor 2, being that in this configuration the axially and/ or radially extending part is comprised of an additional component 16 preferably composed of ferromagnetic material and with good resistance to deformation. Said material may be different from the rotor core material or the same, however, it is important that such material may be any material capable to be coupled in a detachable or secured manner to the rotor core. The coupling can be made by glue or by fixing devices means, such as the rivets 17 illustrated in the figure or other types of fasteners (screw, clamps and etc.) so that there is no imbalance of the motor shaft 5 and loss of efficiency. The idea of this additional component 16 is to enable conventional rotors to be adapted to provide the same advantages of the rotor of the present invention (increased moment of inertia, and base for the magnets 3), which in its preferred embodiment is made with a unique material.

Having described examples of preferred embodiments, it is to be understood that the scope of the present invention includes other possible variations, being limited only by the content of the appended claims, including possible equivalents thereto.

## Claims

1. Brushless type motor comprising a rotor containing surface magnets (3), **characterized by** the fact that the rotor (2) comprises an axial extension (8) extending towards the end opposite to the coupling part of the shaft (5), the axial extension (8) having a height greater than that of the limit (1.1) of the stator (1), the axial extension (8) further presenting a radial extension (9) projecting adjacently to a lower base (3.1) of the magnets (3), said radial extension (9) having an external radius (14) greater than the radius (13) of the rotor surface adjacent to the internal surface of the magnets (3), but less than or equal to the radius (15) of an external surface of the magnets (3).

2. Motor, according to claim 1, **characterized by** the fact that the axial extension (8) of the rotor (2) extends beyond the lower bases (3.1) of the magnets (3).

3. Motor, according to claim 1, **characterized by** the fact that the radial extension (9) extends adjacently to the lower bases (3.1) of the magnets, creating a reference base for axial alignment of the magnets.

4. Motor, according to any one of claims 1 to 3, **characterized by** the fact that the axial extension (8) and radial extension (9) are composed of laminated electric steel.

5. Motor, according to any one of claims 1 to 4, **characterized by** the fact that the axial extension (8) and/ or radial extension (9) comprise a further solid component (16), preferably composed of ferromagnetic material.

6. Motor, according to any one of claims 1 to 4, **characterized by** the fact that the axial extension (8) and/ or radial extension (9) comprise a further detachable solid component (16).

7. Rotor for a motor containing surface magnets (3), **characterized by** the fact that it comprises an axial extension (8) extending towards the end opposite to the coupling part of the shaft (5), the axial extension (8) having a height greater than that of the limit (1.1) of the stator (1), the axial extension (8) further presenting a radial extension (9) projecting adjacently to a lower base (3.1) of the magnets (3), said radial extension (9) having an external radius (14) greater than the radius (13) of the rotor surface adjacent to the internal surface of the magnets (3), but less than or equal to the radius (15) of an external surface of the magnets (3).

8. Rotor, according to claim 7, **characterized by** the fact that the axial extension (8) extends beyond the lower bases (3.1) of the magnets (3).

9. Rotor, according to claim 7, **characterized by** the fact that the radial extension (9) extends adjacently to the lower bases (3.1) of the magnets, to create a reference base for axial alignment of the magnets, during the assembly.

10. Rotor, according to any one of claims 7 to 9, **characterized by** the fact that the axial extension (8) and radial extension (9) are composed of laminated electrical steel.

11. Rotor, according to any one of claims 7 to 10, **characterized by** the fact that the axial extension (8) and/ or radial extension (9) comprises a further solid component (16), preferably composed of ferromagnetic material.

12. Rotor, according to any one of claims 7 to 10, **characterized by** the fact that the axial extension (8) and/ or radial extension (9) comprise a further detachable solid component (16).
